# EUROPEAN PATENT SPECIFICATION

(11) **EP 3 730 317 B1**
(45) Date of publication and mention of the grant of the patent: **29.09.2021**
(21) Application number: 20165278.1
(22) Date of filing: 24.03.2020
(51) Int. Cl.: B60C 13/00

(54) **TIRE**
REIFEN
PNEUMATIQUE

(30) Priority: 22.04.2019 JP 2019081188
(43) Date of publication of application: 28.10.2020
(73) Proprietor: Sumitomo Rubber Industries, Ltd., Kobe-shi, Hyogo-ken 651-0072 (JP)
(72) Inventor: ISHIGAKI, Yuichi, Kobe-shi,, Hyogo 651-0072 (JP); SAKAGUCHI, Tetsuya, Kobe-shi,, Hyogo 651-0072 (JP); FUJITA, Hiroshi, Kobe-shi,, Hyogo 651-0072 (JP)
(74) Representative: Manitz Finsterwald Patent- und Rechtsanwaltspartnerschaft mbB

(56) References cited:
- JP-A- 2017 065 383

## Description

### Technical field

The present invention relates to a tire whose visible outer surface is provided with a decorative region provided with ridges.

### Background art

Patent document 1 below discloses a tire whose visible surface is provided with a plurality of tufts or a plurality of blades. such tufts and blades provided in a region are expected to absorb the incident light and to mat the region so as to increase the contrast of the region.
Patent document 1: Japanese Patent Application Publication No. 2013-505872 (wO2011/036061);
JP 2017 065383 A discloses a tire comprising the features according to the preamble of claim 1.

### Summary of the Invention

### Problems to be resolved by the Invention

such blades and the like are however liable to be partially damaged, for example, by chipping off of rubber and bareness (lack) of rubber.

If the blades are partially damaged, the damaged portion is conspicuous, and further, there is a possibility that the contrast is reduced.

The present invention was made in view of the above situation, and an object of the present invention is to provide a tire in which possible damaged portion becomes less noticeable, and a decrease in the contrast is suppressed.

According to the present invention, a tire has a visible outer surface provided with a decorative region, wherein
the decorative region is provided with ridges arranged side by side, and each of the ridges has
a variable height along its length direction so that the ridge has a minimum height portion and a maximum height portion which are repeated along the length direction, and preferably a variable width along its length direction so that the ridge has a minimum width portion and a maximum width portion which are repeated along the length direction with a pitch distance p1 of from 0.1 to 5.0 mm between the minimum width portions and the maximum width portions.

Furthermore, the decorative region has a bottom face between the adjacent ridges, and each of the ridges has a ridge line including first segments extending along a direction parallel to the bottom face at the respective minimum height portions, and second segments extending along a direction parallel to the bottom face at the respective maximum height portions.

In the tire according to the present invention, it is preferable that the minimum width portions are respectively positioned at the minimum height portions.

In the tire according to the present invention, it is preferable that the maximum width portions are respectively positioned at the maximum height portions.

In the tire according to the present invention, it is preferable that the ridges are arranged parallel with each other at a pitch p3 of from 0.1 to 1.2 mm.

In the tire according to the present invention, it is preferable that the ridge width w1 at the minimum width portion is in a range from 0.05 to 0.25 mm, and the ridge width w2 at the maximum width portion is in a range from 0.25 to 0.55 mm.

In the tire according to the present invention, it is preferable that the ridge height h1 at the minimum height portion is in a range from 0.05 to 0.25 mm, and the ridge height h2 at the maximum height portion is in a range from 0.25 to 0.55 mm.

In the tire according to the present invention, the decorative region may be provided in a sidewall portion of the tire.

In the tire according to an unclaimed example, each of the ridges may have a ridge line extending in the length direction while inclining with respect to the bottom face in a zigzag manner.

The above-said each of the ridges may include third segments connecting between the first segments and the second segments, and inclined with respect to the bottom face.

In the tire according to the present invention, it is preferable that the ratio (p1/w2) of the above-said ridge width w2 at the maximum width portion and the above-said pitch distance p1 between the minimum width portions and the maximum width portions is in a range from 0.8 to 2.0.

In the tire according to the present invention, it is preferable that the ridges include ridges whose cross-sectional shape perpendicular to the ridge's length direction is triangular or trapezoidal.

In the tire according to the present invention, it is preferable that the ridges include ridges whose widthwise center line extends linearly.

In the tire according to the present invention, the decorative region formed in the visible outer surface of the tire is provided with a number of ridges arranged side by side, therefore, the incident light on the decorative region is absorbed and diffused by the ridges, and the decorative region becomes mat, so the contrast of the decorative region with a non-decorative region without the ridges is increased.
Since the ridges each have the variable width and/or the variable height along its length direction, if the ridge is damaged by chipping-off or bareness (lack) of rubber, the damaged portion becomes not conspicuous owing to the ridge shape which is uneven in the ridge length direction. Further, a decrease in the contrast by the damaged portion is suppressed. Further, since the pitch distance p1 between the minimum width portions and the maximum width portions is 0.1 to 5.0 mm, the damaged portion becomes less noticeable.
such effects will be described in detail in the following description of various embodiments.
Therefore, in the tire according to the present invention, even if damage such as rubber chipping-off and bareness occurs, the damaged portions are less or not conspicuous, and a decrease in the contrast of the decorative region may be suppressed.

### Brief Description of the Drawings

Fig. 1 is a perspective partial view of a tire as an embodiment of the present invention.
Fig. 2 is a plan view of a part of the decorative region in Fig. 1.
Fig. 3 is an enlarged perspective view showing the ridges in Fig. 2 according to an unclaimed example.
Fig. 4A is an enlarged top view showing the ridges in Fig. 3.
Fig. 4B is a side view of the ridge in Fig. 3.
Fig. 5A and Fig. 5B are an enlarged perspective view and top view, respectively, of another example of the unclaimed ridge.
Fig. 6A and Fig. 6B are an enlarged perspective view and top view, respectively, of the ridge according to an embodiment of the invention.
Fig. 7A and Fig. 7B are an enlarged perspective view and top view, respectively, of the ridge according to another embodiment of the invention.
Fig. 8A and Fig. 8B are an enlarged perspective view and top view, respectively, of a further example of the unclaimed ridge.

### Description of the Preferred Embodiments

The present invention can be applied to various tires such pneumatic tires and non-pneumatic tires for various vehicles for example passenger cars, motorcycles, heavy vehicles such as trucks and buses and the like.

Taking a pneumatic tire as an example, embodiments of the present invention will be now described in detail in conjunction with accompanying drawings.

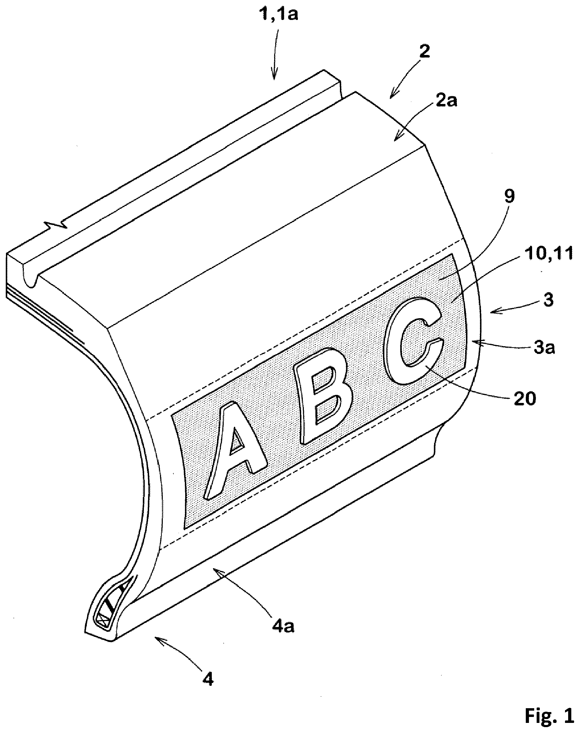

Fig. 1 shows a part of a tire 1 as an embodiment of the present invention.
In this embodiment, the tire 1 is a pneumatic tire for passenger cars.

As well known in the art, a pneumatic tire comprises a tread portion whose outer surface define the ground contacting surface (tread surface) between its tread edges, a pair of axially spaced bead portions, a pair of sidewall portions extending between the tread edges and the bead portions, a carcass extending between the bead portions through the tread portion and sidewall portions, and a tread reinforcement disposed in the tread portion.

The tire 1 according to the present invention has a visible outer surface 1a.

The visible outer surface 1a in this embodiment is visible from the outside of the tire 1 when mounted on a wheel rim (not shown). Thus, the visible outer surface 1a includes an outer surface 2a of the tread portion 2, an outer surface 3a of the sidewall portions 3, and an outer surface 4a of the bead portions 4.

In this embodiment, a part of the outer surface 1a of the tire 1 is provided with a decorative region 9.
More specifically, the outer surface 3a of the sidewall portion(s) 3 of the tire 1 is provided with the decorative region 9.

However, the position of the decorative region 9 is not limited to the outer surface 3a. The decorative region 9 may be provided in the outer surface 2a of the tread portion 2 or the outer surface 4a of the bead portions 4, for example.

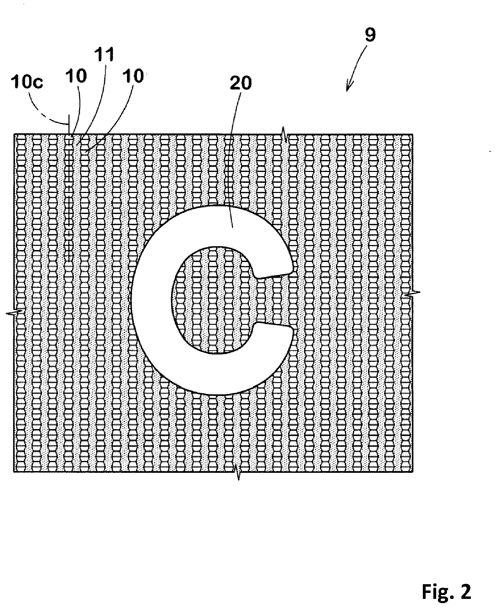

Fig. 2 shows a part of the decorative region 9 in this embodiment. As shown, the decorative region 9 comprises a number of ridges 10 arranged side by side, and a bottom face 11 formed between the ridges 10.
The bottom face 11 in this example is formed as a smooth surface, and the ridges 10 protrude from the bottom face 11.
As shown, the decorative region 9 is formed as the background of non-decorative regions 20 which form markings such characters, symbols and the like.
The non-decorative regions 20 are not provided with the ridges 10 to have relatively smooth and lustrous surfaces.
One purpose of providing the ridges 10 is to make the decorative region 9 matte or dark as compared with the non-decorative regions 20, to thereby increase the contrast between the decorative region 9 and the non-decorative regions 20.

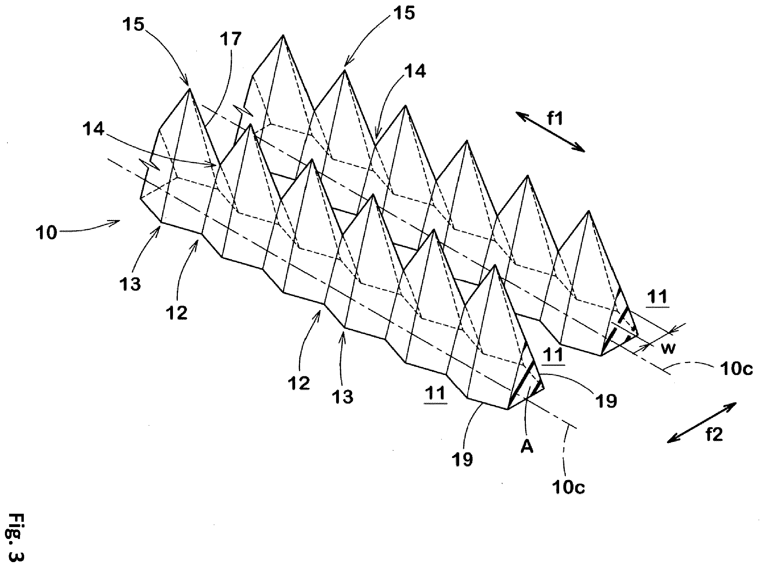

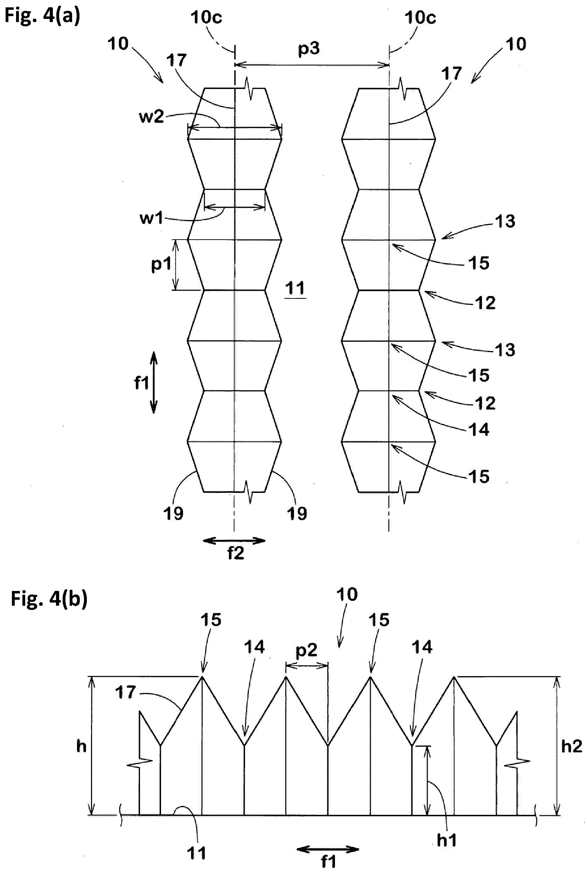

Figs. 3, 4A and 4B show the ridges 10 according to an unclaimed example.
As shown, each of the ridges 10 has a width (w) varied periodically along the length, and is made up of a minimum width portion 12 and a maximum width portion 13 which are repeated in the length direction f1.
As the ridge 10 is formed with such portions where the reflection of light is large and such portions where the reflection of light is less, the contrast of the decorative region 9 between light and dark is enhanced.
Further, as the ridge 10 is formed in an uneven shape, even if the ridge 10 is partially damaged due to rubber chipping or the like, the damaged portion is less noticeable.

It is preferable that the pitch distance p1 between the minimum width portions 12 and the maximum width portions 13 is set in a range from 0.1 to 5.0 mm. Such pitch distance p1 makes the damage portion less noticeable.
Therefore, in the tire 1 in this example, even if damage such as chipping-off of rubber occurs, the damaged portion becomes inconspicuous, and a decrease in the contrast of the decorative region 9 is suppressed.

It is preferable that the pitch distance p2 between the minimum height portions 14 and the maximum height portions 15 is set in a range from 0.1 and 5.0 mm. Thereby, the high contrast of the decorative region 9 is more effectively maintained.

In general, damage such as rubber chipping-off tends to occur at the minimum width portions 12 in a concentrated manner because the minimum width portions 12 have lower strength.

In each of the ridges 10 in this example, the minimum height portions 14 are provided at the respective minimum width portions 12. This may cause damage to be concentrated at the minimum height portions 14 where light reflection is small.
Thereby, the damage becomes less noticeable, and at the same time, the decrease in the contrast of the decorative region 9 is further suppressed.

In each of the ridges 10 in this example, the maximum height portions 15 are provided at the respective maximum width portions 13. Therefore, in the maximum height portions 15 where the light reflection is higher, the possibility of damage such as rubber chipping-off is reduced, and the light reflection is maintained high. Thereby, the contrast of the decorative region 9 becomes clearer.
In this example, the pitch distance p1 between the minimum width portions 12 and the maximum width portions 13 is set to be equal to the pitch distance p2 between the minimum height portions 14 and the maximum height portions 15.

It is preferable that the ridge width w1 at the minimum width portions 12 of each ridge 10 is set in a range from 0.05 to 0.25 mm.
If the ridge width w1 is less than 0.05 mm, the rigidity of the ridge 10 becomes low, and there is a possibility that damage spreading from the ridge 10 to the bottom face 11 is likely to occur. If the ridge width w1 exceeds 0.25 mm, the rigidity of the minimum width portion 12 increases, and there is a possibility that the occurrence of damage cannot be concentrated at the minimum width portions 12.

It is preferable that the ridge width w2 at the maximum width portions 13 of each ridge 10 is set in a range from 0.25 to 0.55 mm.
If the ridge width w2 is less than 0.25 mm, the rigidity at the maximum width portions 13 decreases, and damage may easily occur.
If the ridge width w2 exceeds 0.55 mm, the arrangement pitch p3 between the ridges 10 is increased, and the contrast may be reduced.

In order to make the difference in rigidity between the minimum width portions 12 and the maximum width portions 13 appropriate and to increase the contrast of the decorative region 9 while controlling the location of the damaged, it is preferred that the ratio (w1/w2) of the ridge width w1 at the minimum width portions 12 to the ridge width w2 at the maximum width portions 13 is set in a range from 0.2 to 0.4.
Further, it is preferred that the ratio (p1/w2) of the pitch distance p1 to the ridge width w2 is set in a range from 0.8 to 2.0.

It is preferable that the ridge height h1 at the minimum height portions 14 of each ridge 10 is set in a range from 0.05 to 0.25 mm. If the ridge height h1 is less than 0.05 mm, the light reflection from the bottom face 11 adjacent to the minimum height portions 14 increases, and the contrast of the decorative region 9 may be reduced. If the ridge height h1 exceeds 0.25 mm, the light reflection increases, and as a result, the difference between the light reflection from the minimum height portions 14 and that from the maximum height portions 15 decreases, so the contrast may be reduced.

It is preferable that the ridge height h2 at the maximum height portions 15 of each ridge 10 is set in a range from 0.25 to 0.55 mm. If the ridge height h2 is less than 0.25 mm, the light reflection from the maximum height portions 15 becomes less, and the difference between the light reflection from the maximum height portions 15 and that from the minimum height portions 14 is decreased, so there is a possibility that the contrast of the decorative region 9 is reduced. If the ridge height h2 exceeds 0.55 mm, the maximum height portions 15 tend to be damaged. Further, there is a possibility that the damage of the maximum height portions 15 is conspicuous, and the contrast is reduced.

From the viewpoint of increasing the contrast of the decorative region 9 by setting the difference in light reflection in a favorable condition, it is preferred that the ratio (h1/h2) of the ridge height h1 at the minimum height portions 14 to the ridge height h2 at the maximum height portions 15 is set in a range from 0.2 to 0.4.

In this example, the width (w) of the ridge 10 measured perpendicularly to the length direction decreases as the height from the bottom face 11 increases.
For example, the width (w) is continuously decreased as the height from the bottom face 11 increases. Thereby, damage of the ridge 10 such as rubber chipping-off can be suppressed.

In this example, the cross section of the ridge 10 taken parallel with the bottom face 11 is gradually decreased in the area as the height of the cross section from the bottom face 11 increases.

The ridges 10 are formed, for example, during vulcanization molding the raw tire (not shown). Specifically, by using a vulcanization mold (not shown) of which inner surface is provided with grooves having an inverted pattern of the ridges 10, the raw tire is vulcanization molded, and the ridges 10 are formed by the grooves.

For example, the vulcanization mold is provided with vent channels (not shown) which communicate between the inside and the outside of the vulcanization mold in order to discharge air existing between the raw tire and the vulcanization mold. If the air is not discharged, a bareness (lack) of rubber is liable to occur on the outer surface 1a of the molded tire 1. For example, by opening the vent channels at positions of the grooves at which the maximum height portions 15 are molded, bareness of rubber at the maximum height portions 15 is effectively prevented, and the contrast of the decorative region 9 can be maintained at high levels.
If the bareness of rubber occurs at the minimum height portions 14, the occurrence of such damage (bareness) becomes inconspicuous as explained above, and the higher contrast can be maintained.

In this example, each of the ridges 10 has a ridge line 17 along the length direction f1.
The ridge line 17 extends continuously in the length direction f1, passing though maximum height positions of the ridge 10 along the length direction f1.
In this example, the ridge line 17 is positioned on the widthwise center line 10c of the ridge 10.

In this example, as shown in Fig. 4B, the ridge line 17 extends in a zigzag manner, with zigzag segments inclined with respect to the bottom face 11.
such ridge 10 can make light and darkness clear and enhances contrast.
In this example, between the minimum height portions 14 and the maximum height portions 15, the ridge line 17 extends straight. In other words, the ridge line's zigzag segments between the minimum height portions 14 and the maximum height portions 15 are straight.

In this example, the cross section of each ridge 10 perpendicular to the length direction f1 has a triangular shape as shown in Fig. 3. such ridge 10 effectively exerts the above described functions.
In this example, the area (A) of the above-said cross section becomes minimum at the minimum width portions 12 and the minimum height portions 14, and the area (A) becomes maximum at the maximum width portions 13 and the maximum height portions 15.
And the area (A) is gradually increased from the minimum width portions 12 toward the maximum width portions 13.

The ridge 10 has a pair of root edges 19 extending in the length direction f1 at meeting positions of the ridge 10 with the bottom face 11.
In the ridge 10 in this example, the root edges 19 each extend in a zigzag shape.
Each of the root edges 19 is most distant from the widthwise center line 10c at the maximum width portions 13, and closest to the widthwise center line 10c at the minimum width portions 12.
Between the minimum width portions 12 and the maximum width portions 13, each root edge 19 extends linearly.

In this example, the widthwise center line 10c of the ridge 10 extends linearly as described above. such ridge 10 can exhibit excellent aesthetics.
If the widthwise center line 10c extends in an arc shape (not shown), apparent distances from the maximum height portions 15 and from the minimum height portions 14 are varied, so the contrast may be changed.

It is preferable that the arrangement pitch p3 between the ridges 10 is set in a range from 0.1 to 1.2 mm.
If the arrangement pitch p3 is less than 0.1 mm, the maximum height portions 15 of the adjacent ridges are too close to each other and light reflection is suppressed, so the contrast may be reduced.
If the arrangement pitch p3 exceeds 5.0 mm, the light reflection from the bottom face 11 increases, and the contrast may be reduced.
From such viewpoint, the arrangement pitch p3 is more preferably set in a range from 0.3 to 0.9 mm.
Here, the arrangement pitch p3 is a distance between the widthwise center lines 10c of the adjacent ridges 10.

As shown in Fig. 2 where the upper side is radially outer and the lower side is radially inner, the widthwise center lines 10c of the ridges 10 extend in a radial direction of the tire or extend radially of the tire. The ridges 10 are disposed in the tire circumferential direction.

The arrangement of the ridges 10 is not limited to this example. It is possible that the ridges 10 each extend in an arc shape along the tire circumferential direction, or the ridges 10 extend in a tangential direction to a circumference of the tire (both not shown), In these examples, the ridges 10 are arranged side by side in the tire radial direction.

within the decorative region 9, the non-decorative regions or markings 20 such as characters are formed. The markings 20 are not provided with the ridges 10.
Thus, the ridges 10 can enhance the design of the markings 20 with high contrast with the decorative region 9 as background. The non-decorative regions (markings 20) protrude from the same level as the bottom face 11 of the decorative region beyond the maximum height portions 15 of the ridges 10.

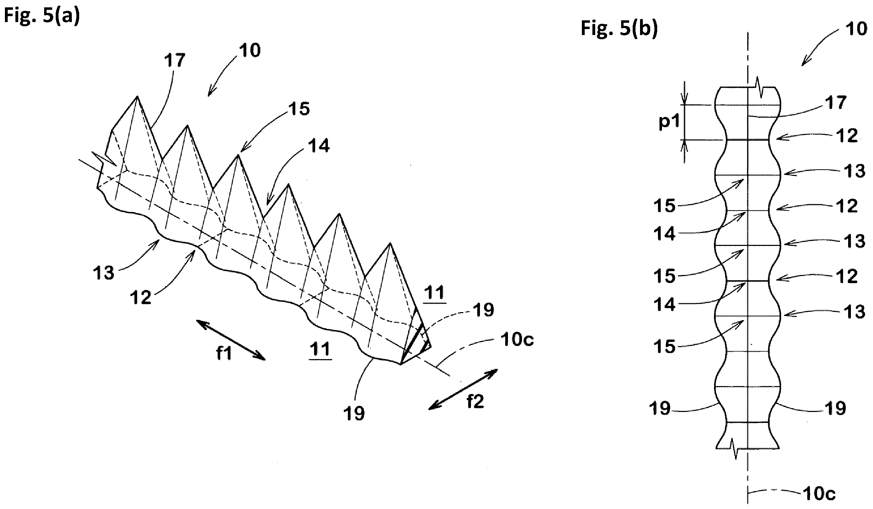

Fig. 5A and Fig. 5B are an enlarged perspective view and top view, respectively, of another example of the ridge 10. The same components as those of the former example are denoted by the same reference numerals, and redundant description thereof may be omitted.
As shown, the root edges 19 of the ridge 10 in this example each extend in a smoothly-curved wavy manner. Each of the root edges 19 is most distant from the widthwise centerline 10c at the maximum width portions 13, and closest to the widthwise centerline 10c at the minimum width portions 12. Such ridge 10 reflects light in multiple directions and enhance the contrast.

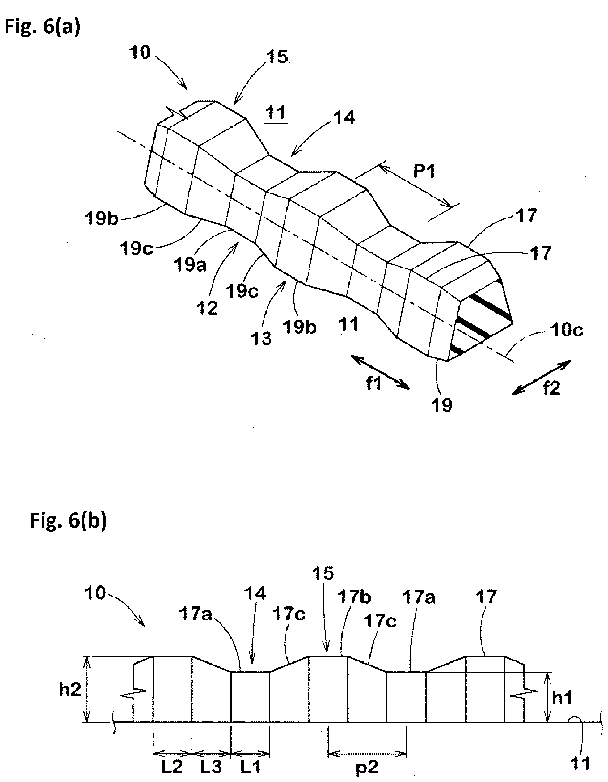

Fig. 6(a) and Fig. 6(b) are an enlarged perspective view and top view, respectively, of another example of the ridge. The same components as those of the former examples are denoted by the same reference numerals, and redundant description thereof may be omitted.
As shown, in this embodiment according to the invention, the ridge 10 has, in its cross section perpendicular to the length direction f1, a trapezoidal shape, more specifically, an isosceles trapezoidal shape in which the inner angles at both ends of the base are equal to each other.

Owing to the trapezoidal cross sectional shape, the ridge 10 has two ridge lines 17 on both sides in the width direction f2. Each of the ridge lines 17 includes first segments 17a extending along the bottom face 11 at the respective minimum height portions 14, and second segments 17b extending along the bottom face 11 at the respective maximum height portions 15. Since such ridge 10 has high rigidity, the occurrence of damage such as rubber chipping-off is suppressed.
Here, the expression "along" means that the ridge line 17 and the bottom face 11 are parallel to each other inclusive of an error which may occur during manufacturing the tire.

Further, each of the ridge lines 17 in this example further includes third segments 17c connecting between the first segments 17a and the second segments 17b. The third segments 17c are inclined with respect to the bottom face 11.
The first segments 17a have a length L1, the second segments 17b have a length L2 and the third segments 17c have a length L3, and the length L1, length L2 and length L3 are the same, for example. such ridge lines 17 increase the rigidity of the ridge 10.

In this embodiment, the root edges 19 of the ridge 10 are each made up of inner portions 19a, outer portions 19b and joint portions 19c. The inner portions 19a extend along the widthwise center line 10c at the respective minimum width portions 12.
The outer portions 19b extend along the widthwise center line 10c at the respective maximum width portions 13. The joint portions 19c connect between the inner portions 19a and the outer portions 19b. At the inner portions 19a and the outer portions 19b, the ridge has higher rigidity, the occurrence of damage such as rubber chipping-off is suppressed.
Here, the expression "along" means that the root edge 19 and the widthwise center line 10c are parallel to each other inclusive of an error which may occur during manufacturing the ti re.
The joint portions 19c are each inclined with respect to the widthwise center line 10c and each extend linearly, so the above-described function is enhanced.

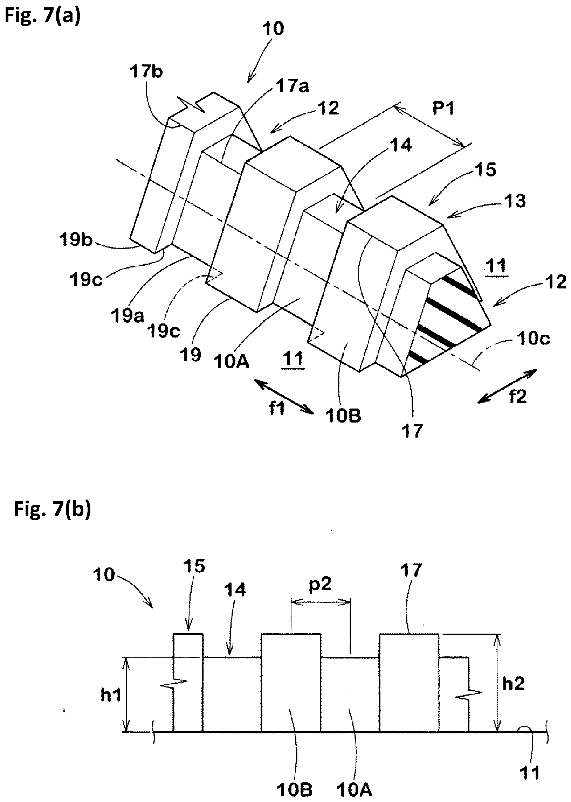

Fig. 7A and Fig. 7B are an enlarged perspective view and top view, respectively, of another example of the ridge. The same components as those of the former examples are denoted by the same reference numerals, and redundant description thereof may be omitted.
As shown, the ridge 10 in this example has a trapezoidal shape in its cross section perpendicular to the length direction f1, more specifically, an isosceles trapezoidal shape. Since such ridge 10 has high rigidity, damage such as rubber chipping-off may be suppressed.

In the ridge 10 in this example, the ridge line 17 is composed of first segments 17a and second segments 17b. The first segments 17a and the second segments 17b extend along the bottom face 11. Further, the ridge 10 in this example has root edges 19 each made up of inner portions 19a, outer portions 19b and joint portions 19c. The inner portions 19a and outer portions 19b extend along the widthwise centerline 10c of the ridge 10. The joint portions 19c in this example are perpendicular to the widthwise centerline 10c unlike the example shown in Figs. 6A and 6(b). Such ridge 10 makes possible damage more likely to occur in the minimum width portions 12 and makes it less noticeable.

The ridge 10 in this example is composed of first ridge portions 10A and second ridge portions 10B which are alternately arranged in the length direction f1.

The first ridge portions 10A include the respective minimum width portions 12 and respective minimum height portions 14, and the second ridge portions 10B include the respective maximum width portions 13 and respective maximum height portions 15.
In each of the first ridge portions 10A, the shape of the cross section of the ridge perpendicular to the length direction f1 is constant along the length direction f1.
Also, in each of the second ridge portions 10B, the shape of the cross section of the ridge perpendicular to the length direction f1 is constant along the length direction f1.

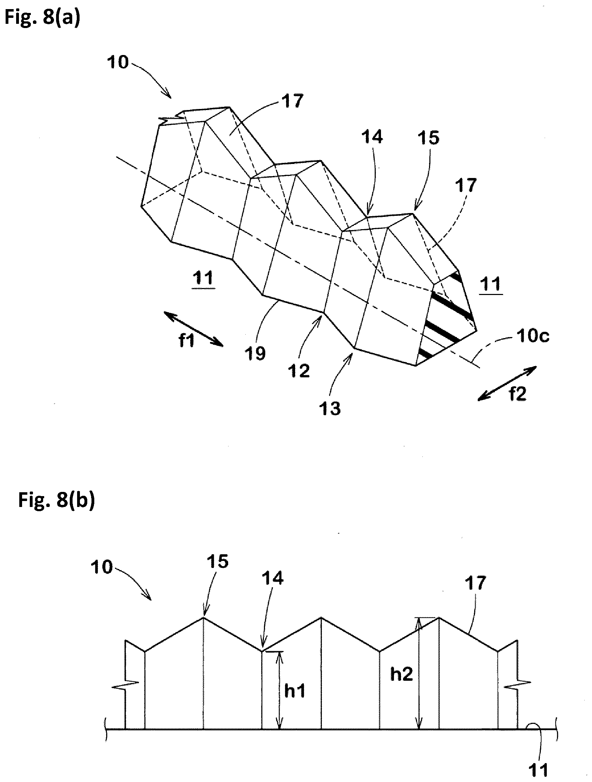

Fig. 8A and Fig. 8B are an enlarged perspective view and top view, respectively, of another example of the ridge. The same components as those of the former examples are denoted by the same reference numerals, and redundant description thereof may be omitted.
As shown, the ridge 10 in this example has a trapezoidal shape in its cross section perpendicular to the length direction f1, more specifically, an isosceles trapezoidal shape. Since such ridge 10 has high rigidity, damage such as rubber chipping-off may be suppressed.

The ridge 10 in this example has the ridge line 17 extending zigzag with zigzag segments inclined with respect to the bottom face 11.
Further, the ridge 10 has the root edges 19 each extending zigzag and positioned most distant from the widthwise center line 10c at the respective maximum width portions 13, and closest to the widthwise center line 10c at the respective minimum width portions 12.
Even in such ridge 10, the above-described functions can be effectively exerted.

In the case of the above examples shown in Figs. 6A and 6(b) and Figs. 7A and 7B, the above-mentioned pitch distance p1 between the minimum width portions 12 and the maximum width portions 13 is defined between the midpoint of the first segment 17a and the midpoint of the second segments 17b.
The above-mentioned pitch distance p2 between the minimum height portions 14 and the maximum height portions 15 is defined between the midpoint of the inner portion 19a and the midpoint of the outer portion 19b.

### Comparison test

In order to confirm the effect of the present invention, tires having a decorative region in the outer surface of a sidewall portion were experimentally manufactured and tested for the appearance of the decorative region and its contrast. The ridges were formed by grooves formed in the inner surface of a vulcanization mold.
specifications of the ridges are listed in Table 1.
In the comparative example and the working examples, specifications other than those described in Table 1 were substantially the same, and the pitch distance p1 was equal to the pitch distance p2 for all of the ridges.

Each test tire was visually observed by an examining staff at a distance of one meter sideways from the tire sidewall portion where the decorative region was formed.
And based on the degree of conspicuousness of damage of the ridges due to bareness (lack) of rubber caused during vulcanization molding the tire, the appearance of the ridges and also the contrast of the decorative region were sensuously evaluated.
The results are indicated in Table 1 by a score based on of Comparative example 1 being 100, wherein the higher value is better.

**Table 1**

| Tire | Comparative example 1 | Comparative example 2 | Example 1 | Comparative example 3 | Example 2 | Example 3 | Comparative example 4 | Example 4 |
|---|---|---|---|---|---|---|---|---|
| Figure showing Ridge | -- | -- | Fig. 3 | Fig. 3 | Fig. 3 | Fig. 3 | Fig. 3 | Fig. 7 |
| h1 (mm) | 0.2 | 0.1 | 0.1 | 0.1 | 0.1 | 0.1 | 0.1 | 0.1 |
| h2 (mm) | 0.2 | 0.1 | 0.3 | 0.3 | 0.3 | 0.3 | 0.3 | 0.3 |
| w1 (mm) | 0.15 | 0.1 | 0.1 | 0.1 | 0.1 | 0.1 | 0.1 | 0.1 |
| w2 (mm) | 0.15 | 0.3 | 0.3 | 0.3 | 0.3 | 0.3 | 0.3 | 0.3 |
| p1 (mm) | -- | 0.5 | 0.5 | 0.05 | 0.1 | 5.0 | 5.5 | 0.5 |
| p3 (mm) | 0.2 | 0.25 | 0.25 | 0.25 | 0.25 | 0.25 | 0.25 | 0.25 |
| Contrast | 100 | 95 | 102 | 95 | 100 | 102 | 97 | 100 |
| Appearance | 100 | 110 | 120 | 105 | 120 | 115 | 105 | 120 |

From the test results, it was confirmed that the tires according to the present invention maintain a high contrast without any noticeable damage as compared with the comparative example tires.

### Reference Signs List

- 1: tire
- 9: decorative region
- 10: ridge
- 12: minimum width portion
- 13: maximum width portion
- 14: minimum height portion
- 15: maximum height portion
- f1: length direction

## Claims

1. A tire (1) having a visible outer surface (1a) provided with a decorative region (9), wherein the decorative region (9) is provided with ridges (10) arranged side by side, and each of the ridges (10) has a variable height along its length direction (f1) so that the ridge (10) has a minimum height portion (14) and a maximum height portion (15) which are repeated along the length direction (f1), and optionally a variable width along its length direction (f1) so that the ridge (10) has a minimum width portion (12) and a maximum width portion (13) which are repeated along the length direction (f1) with a pitch distance p1 of from 0.1 to 5.0 mm between the minimum width portions (12) and the maximum width portions (13), wherein the decorative region (9) has a bottom face (11) between the adjacent ridges (10), **characterized in that** each of the ridges (10) has a ridge line (17) including first segments (17a) extending along a direction parallel to the bottom face (11) at the respective minimum height portions (14), and second segments (17b) extending along a direction parallel to the bottom face (11) at the respective maximum height portions (15).

2. The tire (1) according to claim 1, wherein the minimum width portions (12) are respectively positioned at the minimum height portions (14).

3. The tire (1) according to claim 1 or 2, wherein the maximum width portions (13) are respectively positioned at the maximum height portions (15).

4. The tire (1) according to any one of claims 1 to 3, wherein the ridges (10) are arranged parallel with each other at a pitch p3 of from 0.1 to 1.2 mm.

5. The tire (1) according to any one of claims 1 to 4, wherein the ridge width w1 at the minimum width portion (12) is in a range from 0.05 to 0.25 mm, and the ridge width w2 at the maximum width portion (13) is in a range from 0.25 to 0.55 mm.

6. The tire (1) according to any one of claims 1 to 4, wherein the ridge height h1 at the minimum height portion (14) is in a range from 0.05 to 0.25 mm, and the ridge height h2 at the maximum height portion (15) is in a range from 0.25 to 0.55 mm.

7. The tire (1) according to any one of claims 1 to 6, wherein the decorative region (9) is provided in a sidewall portion (3) of the tire (1).

8. The tire (1) according to any one of claims 1 to 7, wherein said each of the ridges (10) includes third segments (17c) connecting between the first segments (17a) and the second segments (17b), and inclined with respect to the bottom face (11).

9. The tire (1) according to any one of claims 1 to 8, wherein the ratio (p1/w2) of said ridge width w2 at the maximum width portion (13) and said pitch distance p1 between the minimum width portions (12) and the maximum width portions (13) is in a range from 0.8 to 2.0.

10. The tire (1) according to any one of claims 1 to 9, wherein the ridges (10) include ridges (10) whose cross-sectional shape perpendicular to the ridge's length direction (f1) is triangular or trapezoidal.

11. The tire (1) according to any one of claims 1 to 10, wherein the ridges (10) include ridges (10) whose widthwise center line (10c) extends linearly.

## Patentansprüche

1. Reifen (1), der eine sichtbare Außenfläche (1a) aufweist, die mit einem dekorativen Bereich (9) versehen ist, wobei der dekorative Bereich (9) mit Erhöhungen (10) versehen ist, die nebeneinander angeordnet sind, und jede der Erhöhungen (10) derart eine variable Höhe entlang ihrer Längsrichtung (f1) aufweist, dass die Erhöhung (10) einen Minimalhöhenabschnitt (14) und einen Maximalhöhenabschnitt (15) aufweist, die entlang der Längsrichtung (f1) wiederholt werden, sowie optional
derart eine variable Breite entlang ihrer Längsrichtung (f1), dass die Erhöhung (10) einen Minimalbreitenabschnitt (12) und einen Maximalbreitenabschnitt (13) aufweist, die entlang der Längsrichtung (f1) mit einem Zwischenraumabstand p1 von 0,1 bis 5,0 mm zwischen den Minimalbreitenabschnitten (12) und den Maximalbreitenabschnitten (13) wiederholt werden,
wobei
der dekorative Bereich (9) eine Bodenfläche (11) zwischen benachbarten Erhöhungen (10) aufweist,
**dadurch gekennzeichnet, dass**
jede der Erhöhungen (10) eine Erhöhungslinie (17) mit ersten Segmenten (17a), die sich entlang einer Richtung parallel zu der Bodenfläche (11) an den jeweiligen Minimalhöhenabschnitten (14) erstrecken, und mit zweiten Segmenten (17b) aufweist, die sich entlang einer Richtung parallel zu der Bodenfläche (11) an den jeweiligen Maximalhöhenabschnitten (15) erstrecken.

2. Reifen (1) nach Anspruch 1, wobei die Minimalbreitenabschnitte (12) jeweils an den Minimalhöhenabschnitten (14) positioniert sind.

3. Reifen (1) nach Anspruch 1 oder 2, wobei die Maximalbreitenabschnitte (13) jeweils an den Maximalhöhenabschnitten (15) positioniert sind.

4. Reifen (1) nach einem der Ansprüche 1 bis 3, wobei die Erhöhungen (10) mit einem Abstand p3 von 0,1 bis 1,2 mm parallel zueinander angeordnet sind.

5. Reifen (1) nach einem der Ansprüche 1 bis 4, wobei die Erhöhungsbreite w1 an dem Minimalbreitenabschnitt (12) in einem Bereich von 0,05 bis 0,25 mm liegt und die Erhöhungsbreite w2 an dem Maximalbreitenabschnitt (13) in einem Bereich von 0,25 bis 0,55 mm liegt.

6. Reifen (1) nach einem der Ansprüche 1 bis 4, wobei die Erhöhungshöhe h1 an dem Minimalhöhenabschnitt (14) in einem Bereich von 0,05 bis 0,25 mm liegt und die Erhöhungshöhe h2 an dem Maximalhöhenabschnitt (15) in einem Bereich von 0,25 bis 0,55 mm liegt.

7. Reifen (1) nach einem der Ansprüche 1 bis 6, wobei der dekorative Bereich (9) in einem Seitenwandabschnitt (3) des Reifens (1) vorgesehen ist.

8. Reifen (1) nach einem der Ansprüche 1 bis 7, wobei jede der Erhöhungen (10) dritte Segmente (17c) aufweist, die eine Verbindung zwischen den ersten Segmenten (17a) und den zweiten Segmenten (17b) herstellen und bezogen auf die Bodenfläche (11) geneigt sind.

9. Reifen (1) nach einem der Ansprüche 1 bis 8, wobei das Verhältnis (p1/w2) der Erhöhungsbreite w2 an dem Maximalbreitenabschnitt (13) und des Zwischenraumabstands p1 zwischen den Minimalbreitenabschnitten (12) und den Maximalbreitenabschnitten (13) in einem Bereich von 0,8 bis 2,0 liegt.

10. Reifen (1) nach einem der Ansprüche 1 bis 9, wobei die Erhöhungen (10) solche Erhöhungen (10) umfassen, deren Querschnittsform rechtwinklig zu der Erhöhungs-Längsrichtung (f1) dreieckig oder trapezförmig ist.

11. Reifen (1) nach einem der Ansprüche 1 bis 10, wobei die Erhöhungen (10) solche Erhöhungen (10) umfassen, deren auf die Breite bezogene Zentrallinie (10c) sich linear erstreckt.

## Revendications

1. Pneumatique (1) ayant une surface extérieure visible (1a) dotée d'une région décorative (9), dans lequel la région décorative (9) est dotée de nervures (10) agencées côte à côte, et chacune des nervures (10) a une hauteur variable le long de sa direction longitudinale (f1) de sorte que la nervure (10) a une portion de hauteur minimum (14) et une portion de hauteur maximum (15) qui sont répétées le long de la direction longitudinale (f1), et en option
une largeur variable le long de sa direction longitudinale (f1) de sorte que la nervure (10) a une portion de largeur minimum (12) et une portion de largeur maximum (13) qui sont répétées le long de la direction longitudinale (f1) avec une distance de pas p1 allant de 0,1 à 5,0 mm entre les portions de largeur minimum (12) et les portions de largeur maximum (13),
dans lequel
la région décorative (9) a une face de fond (11) entre les nervures adjacentes (10),
**caractérisé en ce que**
chacune des nervures (10) a une ligne de nervure (17) incluant des premiers segments (17a) s'étendant le long d'une direction parallèle à la face de fond (11) au niveau des portions de hauteur minimum (14) respectives, et des deuxièmes segments (17b) s'étendant le long d'une direction parallèle à la face de fond (11) au niveau des portions de hauteur maximum (15) respectives.

2. Pneumatique (1) selon la revendication 1, dans lequel les portions de largeur minimum (12) sont respectivement positionnées au niveau des portions de hauteur minimum (14).

3. Pneumatique (1) selon la revendication 1 ou 2, dans lequel les portions de largeur maximum (13) sont respectivement positionnées au niveau des portions de hauteur maximum (15).

4. Pneumatique (1) selon l'une quelconque des revendications 1 à 3, dans lequel les nervures (10) sont agencées en parallèle les unes aux autres à un pas p3 allant de 0,1 à 1,2 mm.

5. Pneumatique (1) selon l'une quelconque des revendications 1 à 4, dans lequel la largeur de nervure w1 au niveau de la portion de largeur minimum (12) est dans une plage allant de 0,05 à 0,25 mm, et la largeur de nervure w2 au niveau de la portion de largeur maximum (13) est dans une plage allant de 0,25 à 0,55 mm.

6. Pneumatique (1) selon l'une quelconque des revendications 1 à 4, dans lequel la hauteur de nervure h1 au niveau de la portion de hauteur minimum (14) est dans une plage allant de 0,05 à 0,25 mm, et la hauteur de nervure h2 au niveau de la portion de hauteur maximum (15) est dans une plage allant de 0,25 à 0,55 mm.

7. Pneumatique (1) selon l'une quelconque des revendications 1 à 6, dans lequel la région décorative (9) est dotée d'une portion formant paroi latérale (3) du pneumatique (1).

8. Pneumatique (1) selon l'une quelconque des revendications 1 à 7, dans lequel chacune desdites nervures (10) inclut des troisièmes segments (17c) assurant une connexion entre les premiers segments (17a) et les deuxièmes segments (17b), et est inclinée par rapport à la face de fond (11).

9. Pneumatique (1) selon l'une quelconque des revendications 1 à 8, dans lequel le rapport (p1/w2) de ladite largeur de nervure w2 au niveau de la portion de largeur maximum (13) et de ladite distance de pas p1 entre les portions de largeur minimum (12) et les portions de largeur maximum (13) est dans une plage allant de 0,8 à 2,0.

10. Pneumatique (1) selon l'une quelconque des revendications 1 à 9, dans lequel les nervures (10) incluent des nervures (10) dont la forme de section transversale perpendiculaire à la longueur longitudinale de nervure (f1) est triangulaire ou trapézoïdale.

11. Pneumatique (1) selon l'une quelconque des revendications 1 à 10, dans lequel les nervures (10) incluent des nervures (10) dont la ligne centrale en direction de la largeur (10c) s'étend linéairement.
